Europäisches Patentamt

European Patent Office

Office européen des brevets

(19)

(11) Publication number: **0 339 790**

**A1**

## (12) EUROPEAN PATENT APPLICATION

(21) Application number: **89302870.4**

(22) Date of filing: **22.03.89**

(51) Int. Cl.⁴: **C23C 6/00 , F16C 33/14**

(30) Priority: **26.04.88 GB 8809794**

(43) Date of publication of application:
**02.11.89 Bulletin 89/44**

(84) Designated Contracting States:
**AT BE CH DE ES FR GB GR IT LI LU NL SE**

(71) Applicant: **VICKERS PLC**
**Vickers House Millbank Tower Millbank**
**London SW1P 4RA(GB)**

(72) Inventor: **High, Raymond William**
**Arthursdale Sandy Bank**
**Riding Mill Northumberland(GB)**

(74) Representative: **MacDougall, Donald**
**Carmichael et al**
**Marks & Clerk 19 Royal Exchange Square**
**Glasgow G1 3 AE Scotland(GB)**

(54) Application of bearing alloy to bearing surfaces.

(57) White metal bearing alloy is applied to a bearing surface of a structure by loading the surface with a covering of flux, then rendering the flux molten by heat application, then progressively displacing the molten flux layer on the bearing surface with a moving body of liquid white metal. The resultant product is thereafter cooled. With this method atmospheric influences on the bearing surface are excluded and accordingly a tin interface layer is not required.

EP 0 339 790 A1

## APPLICATION OF BEARING ALLOY TO BEARING SURFACES

This invention relates to the application of bearing alloy to a bearing surface.

Bearing alloys such as white metal are already known and are applied to the bearing surface of a base structure, eg. steel, cast iron and copper based metals by a time-consuming and labour intensive method which involves heating the base structure, stopping off those surfaces thereof which are not to receive white metal, fluxing the bearing surface, dipping the structure in a bath of molten tin to coat the bearing surface with tin, removing the structure from the tin bath and transferring the structure to a white metal processing station whilst maintaining the temperature of the structure at an elevated level, and thereafter pouring molten white metal onto the tin coating and cooling the resultant product. Each stage in this process is time-consuming and labour intensive.

It is an object of the present invention to provide a new and improved method of applying bearing alloy to a bearing surface.

According to the present invention there is provided a method of applying white metal bearing alloy to a bearing surface of a base structure said method comprising the steps of:
loading the bearing surface with a covering of flux;
heating the fluxed structure to render the flux molten;
confining the molten flux to a covering layer on the bearing surface;
progressively displacing the molten flux layer covering the bearing surface with a moving body of liquid white metal; and
cooling the resultant product.

The fluxed structure may be heated by irradiation such as by IR radiant heating energy of short or medium wavelength. Heating may be continued through the displacement of the molten flux layer by the liquid white metal or may be terminated prior to such displacement.

The molten flux may be confined by the bearing surface being in the form of a recess in the case where the base structure is held essentially static throughout the process. The bearing surface may be rendered recessed by the temporary application of a frame device. In these cases the bearing surface is essentially planar. In the case where the bearing surface is curved, being either a partial or complete arc, the molten flux may be confined by axially-disposed walls and by centrifugal force.

The liquid white metal which displaces the molten flux layer may be provided by a molten supply of white metal which is poured locally onto the molten flux layer and by fluid flow or centrifugal force progressively displaces the remainder of the molten flux layer or, alternatively, by a solid supply of white metal which is applied to the bearing surface and heated in situ until molten. The solid supply of white metal may be in the form of rods, pellets or chippings each providing a source for a body of molten white metal which by fluid flow progressively displaces the molten flux layer.

Cooling of the product preferably is by application of a water containing coolant to the exterior surfaces of the base structure. The coolant may be an air jet containing water or may be a water jet. In any event the coolant is applied to give controlled directional solidification from the bond line between the white metal and the bearing structure to the exposed surface of the white metal.

By virtue of the present invention application of white metal bearing alloy is effected in the absence of a tin interface layer;.stopping off of the surfaces other than the bearing surface is avoided; heating of the base structure is substantially reduced; the method can be applied to a multiplicity of base structures essentially simultaneously within a single heating cycle and labour involvement is minimised.

Absence of the tin interface layer, in accordance with the present invention, is practical because of the presence of the molten flux layer and its progressive displacement by the molten white metal, these factors combining to exclude atmospheric influences on the bearing surface.

Embodiments of the present invention will now be described by way of example with reference to the accompanying drawings, in which:-

Fig. 1 illustrates a typical base structure having a bearing surface for receiving bearing alloy;

Figs. 2, 3 and 4 illustrate sequential steps in a preferred method of applying white metal bearing alloy to the base structure of Fig. 1; and

Fig. 5 illustrates part of the process involved in accordance with the present invention when the product has an arcuate bearing surface.

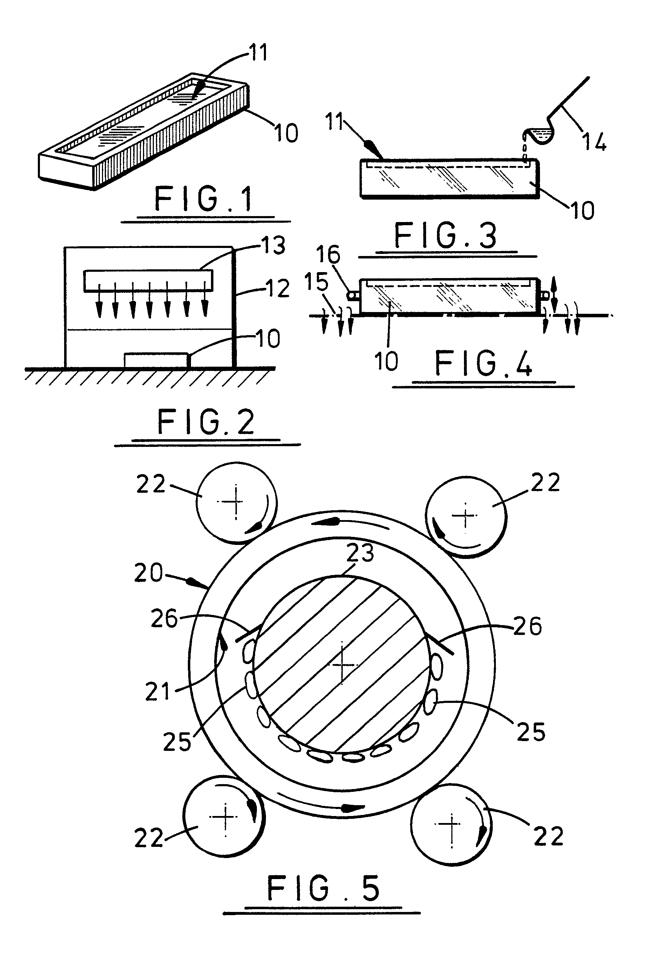

A typical base structure 10 is illustrated in Fig. 1 being in the form of a bar 310 mm in length, 60 mm in width, 20 mm in thickness and having an upper surface 11 which is recessed and forms a support surface for the bearing alloy. This surface is loaded with a covering of flux. The structure 10 is placed within an infrared oven 12 shown in Fig. 2 containing an overhead heater 13 the radiation from which traverses an area 500 mm x 500 mm. The radiation wavelength may be either short or medium in the infrared waveband. Structure 10 is heated for a period to raise the temperature of the structure and its flux loading to a temperature in the range 250-260°C at which point the flux is molten and forms a covering layer over the surface 11 being confined to that surface by virtue of the recess nature of the surface 11. At the end of this heating period the structure 10 is removed from the oven 12 and molten white metal from a ladle 14 (Fig. 3) is carefully poured locally onto the molten flux layer and by fluid flow the molten white metal progressively displaces the remainder of the molten flux layer from the surface 11 such that the body of liquid white metal interfaces with the surface 11 and the remaining molten flux adheres to the exposed surface of the white metal. The resultant product is cooled as illustrated in Fig. 4 by directing a flow of water containing coolant from a ring main 16 to the exterior surfaces of the structure 10 so that the water engages the exposed surfaces permitting solidification of the molten white metal to occur progressively from its interface with the bar towards its exposed face. The coolant may be an air jet containing water or may be a water jet and in the event of excess water being present this is drained away from the structure 10 by an apertured tray 15.

The duration of the heating interval is dependent upon the thickness of the bar forming structure 10 and is essentially directly proportional to thickness and power density. The oven 12 may have first and second chambers with the heater 13 movable between the chambers to enable heating of a structure in the first chamber at the same time as cooling of another structure in the second chamber, and vice versa.

It will be appreciated that prior to the product being cooled the molten body of white metal covering surface 11 may be puddled utilising a puddle stick. Molten white metal is at a temperature of about 280°C.

In the event that the bearing surface 11 is not recessed or troughed the molten flux may be confined to the non-recessed surface 11 by temporary application of a frame device to the structure 10 which preferably is applied to structure 10 after a preliminary heating interval when the temperature of the structure 10 has been raised to about 160-170°C.

The surface 11 either in its recessed or non-recessed form is essentially planar and preferably prior to being coated with flux is cleaned by shot-blasting. During the time interval that the flux covering is molten and the white metal layer is molten, the structure 10 is essentially static within the oven 12 or oven chamber.

In another embodiment schematically illustrated in Fig. 5 the product 20 is in the form of a partial or complete arc provided with a curved bearing surface 21. In this case the product 20 is mounted for rotation by a plurality of rollers 22, one of which is a drive roller and during rotation of the product 20 the surface 21 is heated by radiant heaters carried on the outer surface of a retractable mandrel 23. The rotational speed of the product 20 is maintained at a level sufficient to provide an even coating of molten flux on the surface 21 by virtue of centrifugal force. When the flux has been rendered molten the mandrel 23 is retracted from the bore of the product 20, the rotational speed of the product is increased and molten white metal is carefully poured from a ladle onto the molten flux layer to enable progressive displacement of that flux layer with a moving body of liquid white metal which is retained on the surface 21 by virtue of centrifugal force. Rotation of the product 20 is continued after application of the molten white metal and during the cooling cycle when an air/water jet of coolant is applied to the outer surface of the product 20 to provide controlled directional solidification of the white metal from its bond line with the product 20 to its exposed surface. Following solidification of the white metal rotation of the product 20 is terminated and the product is removed from the rollers 22.

It will be appreciated that the bearing surface 21 may be recessed into the product 20 in which case molten flux and white metal is confined to the bearing surface by the upstanding edges of the product 20. In the event that the surface 21 is not recessed the product 20 is clamped to axially-disposed removable end walls to effect confining of the molten flux and white metal during such time as the product 20 is being rotated.

Mandrel 23, which is non-rotational, preferably comprises a plurality of radiant infrared heating elements 25 mounted on its exterior surface and protected from spillage of molten flux by guards 26.

Claims

1. A method of applying white metal bearing alloy to a bearing surface of a base structure said method comprising the steps of:
loading the bearing surface with a covering of flux;
heating the fluxed structure to render the flux molten;
confining the molten flux to a covering layer on the bearing surface;
progressively displacing the molten flux layer covering the bearing surface with a moving body of liquid white metal; and
cooling the resultant product.

2. A method as claimed in claim 1, wherein the liquid white metal which displaces the molten flux layer is provided by a molten supply of white metal which is poured locally onto the molten flux layer and by fluid flow progressively displaces the remainder of the molten flux layer.

3. A method as claimed in claim 1, wherein a solid supply of white metal is applied to the bearing surface and heated in situ until molten to provide a source for a body of molten white metal which by fluid flow progressively displaces the molten flux layer.

4. A method as claimed in any preceding claim, wherein cooling of the product is by application of a water-containing coolant to the exterior surfaces of the base structure applied to give controlled directional solidification from the bond line between the white metal and the bearing structure to the exposed surface of the white metal.

5. A method as claimed in any preceding claim, wherein heating of the fluxed structure is effected by irradiation with radiant energy in the infrared waveband.

6. A method as claimed in claim 5, wherein heating of the fluxed structure is maintained during the displacement of the molten flux layer by the liquid white metal.

FIG.1

FIG.3

FIG.2

FIG.4

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-2 881 491 (W.E. JOMINY) <br> * Claim 1; column 2, lines 59-72; column 3, lines 1-4; column 8, lines 32-75 * | 1 | C 23 C 6/00 <br> F 16 C 33/14 |
| A | * Claim 1; column 8, lines 32-75 * | 2-4,6 | |
| Y | GB-A- 708 846 (THE GLACIER METAL CO.) <br> * Claims 1-6 * | 1 | |
| A | FR-A-1 253 540 (G. TRIONE) <br> * Claims; page 2, left-hand column, lines 26-31 * | 1-4 | |
| A | US-A-4 117 580 (F. HECK) <br> * Claims 1-3,5; column 6, lines 1-19 * | 1-4,6 | |

TECHNICAL FIELDS SEARCHED (Int. Cl.4)

C 23 C
F 16 C

The present search report has been drawn up for all claims

| Place of search | Date of completion of the search | Examiner |
|---|---|---|
| THE HAGUE | 02-08-1989 | ELSEN D.B.A. |